# EUROPÄISCHE PATENTSCHRIFT

(11) **EP 0 637 211 B1**
(45) Veröffentlichungstag und Bekanntmachung des Hinweises auf die Patenterteilung: **12.05.1999**
(21) Anmeldenummer: 94908242.4
(22) Anmeldetag: 11.03.1994
(51) Int. Cl.: A23N 1/00

(54) **VERFAHREN ZUM TRENNEN FESTER UND FLÜSSIGER ANTEILE**
METHOD OF SEPARATING SOLID AND LIQUID COMPONENTS
PROCEDE PERMETTANT DE SEPARER DES CONSTITUANTS SOLIDES ET LIQUIDES

(30) Priorität: 02.04.1993 CH 1013/93
(43) Veröffentlichungstag der Anmeldung: 08.02.1995
(73) Patentinhaber: BUCHER-GUYER AG Maschinenfabrik, CH-8166 Niederweningen/Zürich (CH)
(72) Erfinder: HARTMANN, Eduard, CH-5425 Schneisingen (CH)
(86) Internationale Anmeldenummer: CH9400052
(87) Internationale Veröffentlichungsnummer: WO9422332

(56) Entgegenhaltungen:
- EP-A- 0 485 901
- US-A- 3 103 438
- US-A- 3 116 682
- US-A- 3 346 392

## Beschreibung

Die Erfindung betrifft ein Verfahren zum Trennen von löslichen Stoffen von unlöslichen festen Anteilen in einem mindestens teilweise zerkleinerten, aber noch nicht entsafteten Zellenverband insbesondere von Früchten unter Verwendung einer Presse, Zentrifuge oder eines Dekanters, sowie eines Lösungsmittels.

Die Pressfähigkeit einer Apfelmaische ist vor allem durch das Verhältnis von Härte der Zellstruktur zu Viskosität des Saftes gekennzeichnet. Besonders bei gelagerten Äpfeln oder beim Cloudy- Juice Prozess liegt ein sehr ungünstiges derartiges Verhältnis vor. Die Folge ist eine stark reduzierte Ausbeute und auch Pressenleistung. Der Einsatz von Maischeenzymen zur Steigerung von Ausbeute und Leistung ist aus verfahrenstechnischen oder wirtschaftlichen Gründen nicht immer möglich.

Verwendet man zur Fest- Flüssig- Trennung Bandpressen, so sind zur Erreichung einer akzeptablen Leistung und Ausbeute mehrstufige Anlagen bekannt, welche mit Zwischenwässerung und einem Wasseranteil von 20 bis 40 % bezogen auf die Rohware fahren. So ist gemäss DE-C2 26 44 976 (R. Besnard) eine Bandpresse zum Auspressen von in Pulpen enthaltener Flüssigkeit bekannt. Sie umfasst je ein umlaufendes endloses unteres und oberes Filterband, die über Führungswalzen geführt und deren benachbarte Trumme mittels Presswalzen gegeneinander gepresst sind. Dabei wird die Pulpe auf dem oberen Trum des oberen Filterbandes einer Filtration, anschliessend einem Rühren des pulpösen Rückstandes unter Zusatz eines Lösungsmittels und schliesslich zwischen den beiden Filterbändern einer Pressung unterzogen. Unter dem Ende des oberen Trums des oberen Filterbandes ist eine Mischkammer mit einer Wasserzuleitung, einem Rührwerk, sowie mit einem Überlauf an der Mischkammer oberhalb der Einlaufstrecke des unteren Filterbandes angeordnet.

Weiterhin ist gemäss EP-A1 0 149 183 (Bellmer) ein Verfahren zum Auspressen insbesondere von Früchten in mindestens zwei Schritten bekannt. Dabei werden im ersten Schritt die Früchte zur Gewinnung von naturreinem Saft erster Qualität in einer Presse ausgepresst, und aus dem Fruchtkonzentrat (Trester) wird unter Wasserverwendung ein Saft zweiter Qualität (Nektar, Fruchtsaftgetränk) gewonnen. Der von der Presse abgeworfene Trester wird mit einer dosierbaren Wassermenge angereichert und durchläuft eine Reaktionsstation, wo er für eine einstellbare Zeit verweilt. Schliesslich wird er unmittelbar einer zweiten Pressung zugeführt.

Der Erfindung liegt die Aufgabe zugrunde, eine Erhöhung von Leistung und Ausbeute bei Fest- Flüssig- Trennverfahren zu erreichen.

Die Lösung dieser Aufgabe bringt ein Verfahren der eingangs genannten Art, welches sich dadurch auszeichnet, dass zuerst das Lösungsmittel dem mindestens teilweise zerkleinerten, aber noch nicht entsafteten Zellenverband zugeführt wird, und dann die flüssigen Anteile des Gemisches aus Zellenverband und Lösungsmittel mit der Presse, Zentrifuge oder mit dem Dekanter von den festen Anteilen getrennt werden.

Nach einem vorteilhaften Merkmal der Erfindung wird als Lösungsmittel eine Flüssigkeit, insbesondere Wasser, Alkohol oder Salzsäure zugeführt.

Nach einem weiteren Merkmal der Erfindung wird die Flüssigkeitszufuhr in Abhängigkeit von der Menge der zugeführten Zellenverbände geregelt.

Vorzugsweise wird die Menge der zugeführten Flüssigkeit proportional der Menge der zugeführten Zellenverbände so geregelt, dass die Saftausbeute 90 Gewichts- % der Menge der zugeführten Zellenverbände beträgt.

Weitere Merkmale der Erfindung sind den Patentansprüchen zu entnehmen.

Die mit der Erfindung erzielten Vorteile liegen in der Leistungs- und Ausbeuteerhöhung gegenüber Verfahren ohne Vorwässerung. Bei Lagerobst mit Maischeenzymierung konnte mit einer erfindungsgemässen Wasserzugabe von 20 % bei gleicher Ausbeute eine Leistungsverdoppelung erreicht werden. Im Vergleich zur Zugabe des Wassers nach einem ersten Pressvorgang in die Trester bringt die erfindungsgemässe Vorwässerung den wirtschaftlichen Vorteil geringerer Investition für gleiche Leistung und Ausbeute, weil nur ein Pressvorgang nötig ist. Dabei ist vorausgesetzt, dass bei einer nachfolgenden Aufkonzentrierung des Saftes in beiden Fällen die gleiche Menge Wasser verdampft wird.

Die Erfindung ist in der folgenden Beschreibung und der Zeichnung, die vier Ausführugsbeispiele darstellt, näher erläutert. Es zeigen
- Fig. 1: ein Schema einer erfindungsgemässen Vorrichtung zum Trennen von festen und löslichen Anteilen von Früchten,
- Fig. 2: ein Schema einer Vorrichtung gemäss Fig. 1, mit einem Mikroprozessor,
- Fig. 3: eine Ergänzung einer Vorrichtung gemäss Fig. 1 oder 2 mit einem Druckbehälter als Diffusionsreaktor und
- Fig. 4: eine weitere Ergänzung einer Vorrichtung gemäss Fig. 1 oder 2 mit einem Druckbehälter als Diffusionsreaktor.

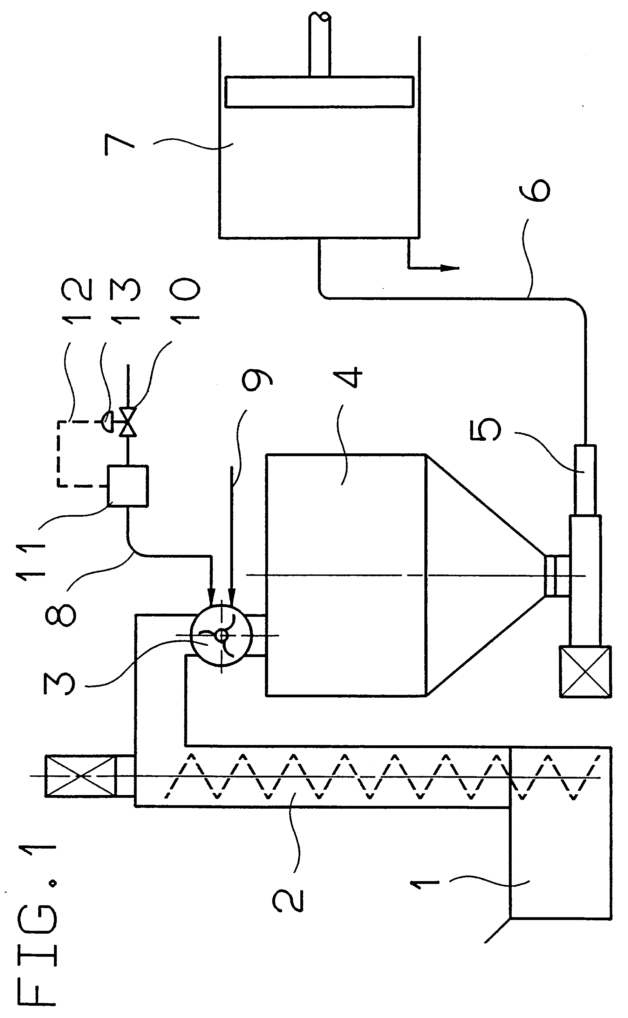

Die in Fig. 1 dargestellte Trennvorrichtung umfasst ein Tiefsilo 1 zur Aufnahme von zu entsaftendem Obst. Ein angeschlossener Vertikalelevator 2 fördert die Äpfel oder Birnen zum Eingang eines Rätzmühle- Aggregates 3 zum Einmaischen des Obstes, welches anschliessend in einen Sammelbehälter 4 gelangt. Eine am Behälter 4 angeschlossene Pumpe 5 fördert die Maische über eine Förderleitung 6 in eine Presse 7 zur Abtrennung der flüssigen Obstanteile mit den darin gelösten extrahierten Stoffen.

Wie Fig. 1 zeigt, besitzt die Rätzmühle 3 eine Zuführung 8 für Wasser als Lösungsmittel und eine Zuführung 9 für Enzyme zur Verbesserung der Stoffextraktion. In die Wasserzuführung 8 ist ein Regelventil 10 und ein Durchflussmesser 11 eingeschaltet, dessen Ausgangssignal über eine Leitung 12 einer Steuerstufe 13 zur Steuerung des Ventiles 10 zugeführt wird. Mit der Regelschaltung 10, 11, 12, 13 wird ein konstanter Wasserstrom an der Zuführung 8 erreicht, dessen Grösse an der Steuerstufe 13 einstellbar ist.

Aus Versuchsergebnissen lässt sich entnehmen, dass die so erzielte neuartige und sehr frühe Wasserzugabe den Diffusionseffekt im Maischetank 4 und in der Presse 7 begünstigt.

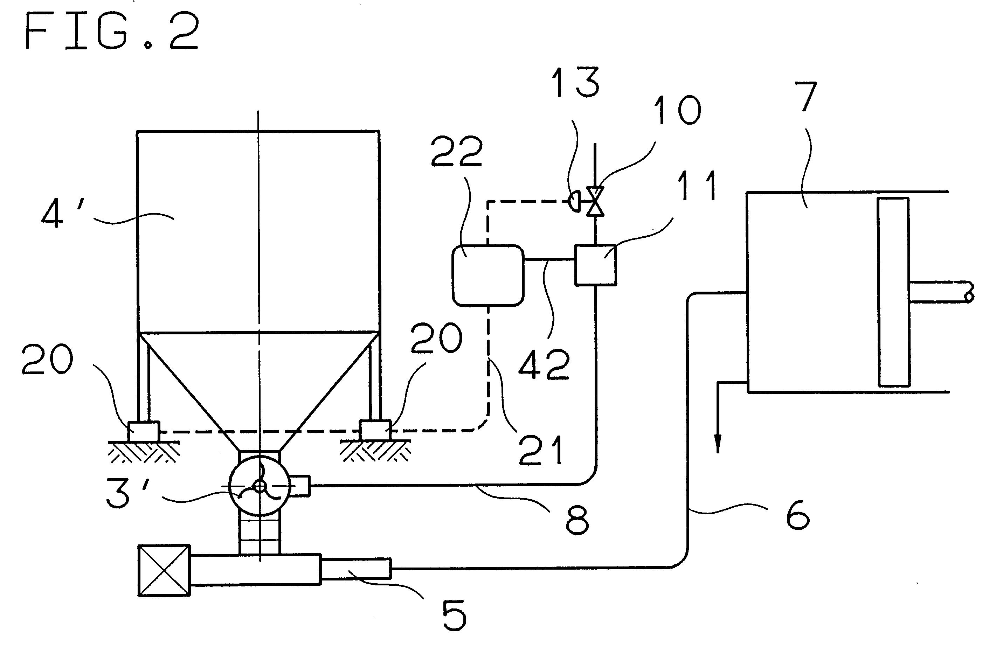

In der Fig. 2 tragen die der Fig. 1 entsprechenden Elemente die bereits erklärten Bezugszeichen. Bei der in Fig. 2 gezeigten Vorrichtung gelangt das Obst vom Vertikalelevator 2 zunächst in einen Obst- Sammelbehälter 4', dem eine Rätzmühle 3' nachgeschaltet ist. Das vermahlene Obst gelangt dann über die Pumpe 5 und Leitung 6 wieder zur Presse 7. Über die Zuführung 8, den Hahn 10 und den Durchflussmesser 11 wird der Rätzmühle 3' wieder Wasser zur Extraktionsverbesserung zugeführt.

Zur besseren Dosierung besitzt der Sammelbehälter 4' Wägemittel 20, deren Ausgangssignal an einer Leitung 21 zur Verfügung steht und Auskunft gibt über die Obstmenge, welche aus dem Sammelbehälter pro Sekunde abgeführt wird. Dieses Signal wird mit der Leitung 21 einem Mikroprozessor 22 zugeführt, welcher gleichzeitig vom Durchflussmesser 11 über die Leitung 42 ein Signal erhält, welches die pro Sekunde der Rätzmühle 3' zugeführte Wassermenge misst. Der Mikroprozessor 22 verarbeitet die ihm zugeführten Signale zu einem Steuersignal für den Wasserzufluss, welches über die Steuerstufe 13 auf den Hahn 10 wirkt.

Am Mikroprozessor 22 lassen sich Programme speichern, welche die Abhängigkeit der Flüssigkeitszufuhr über die Zuführleitung 8 von der Menge der aus dem ObstSammelbehälter 4' der Rätzmühle 3' zugeführten Zellenverbände definieren. Es hat sich gezeigt, dass für diese Abhängigkeit mit Vorteil eine Proportionalität von mindestens 5 % Wasserzugabe zu wählen ist, wobei der Proportionalitäts- Faktor so bestimmt wird, dass die Saftausbeute an der Presse 7 in kg Saft etwa 90 % der Menge der der Rätzmühle 3' zugeführten Zellenverbände in kg Frucht beträgt.

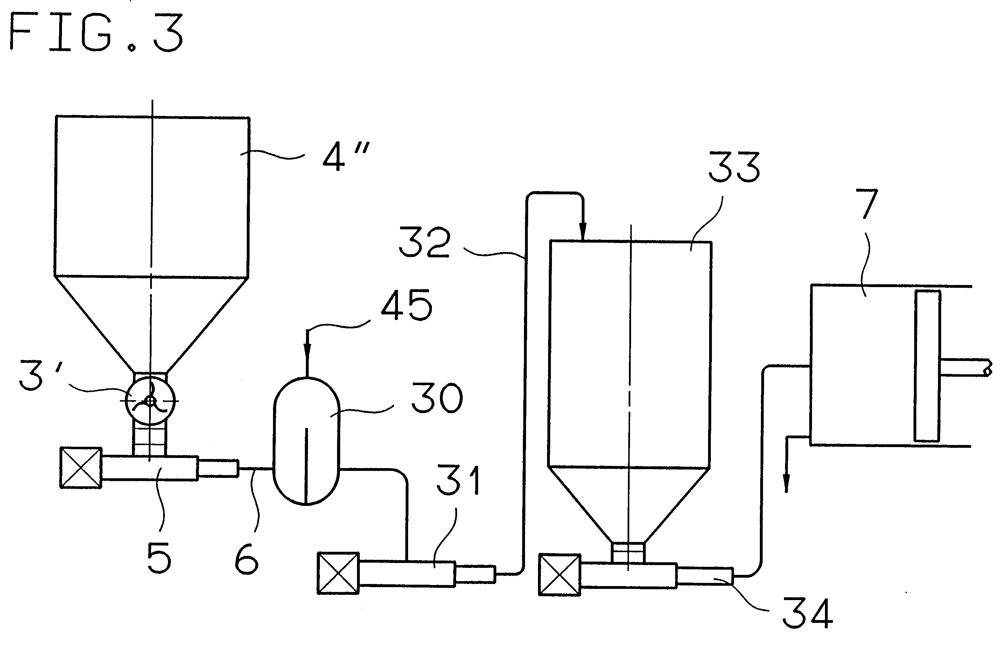

Fig. 3 zeigt schematisch eine Variante der Trennvorrichtung gemäss Fig. 2. Hier wird die in der Rätzmühle 3' vorgewässerte Maische mit der Pumpe 5 nicht direkt der Presse 7, sondern zunächst einem Druckbehälter 30 als Diffusionsreaktor zugeführt. Im Druckbehälter 30 wird das Gemisch aus den Zellverbänden und dem Lösungsmittel über einen Anschluss 45 mit einem Überdruck von Luft oder Stickstoff beaufschlagt und unter einem Überdruck von vorzugsweise 5 bar über eine Verweilzeit gehalten. Anschliessend wird dieses Gemisch über eine Pumpe 31, eine Leitung 32, einen Pufferbehälter 33 und eine weitere Pumpe 34 der Presse 7 zugeführt.

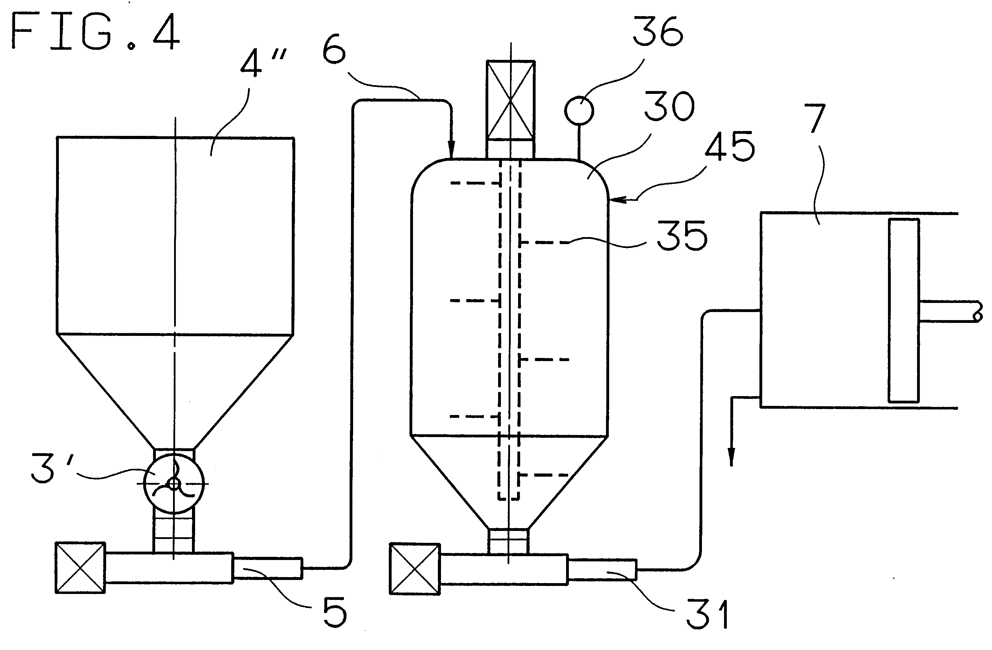

In Fig. 4 ist der Druckbehälter 30 gemäss Fig. 3 mit weiteren Einzelheiten gezeigt, wobei in dieser Anordnung der Pufferbehälter 33 entfällt. Der Druckbehälter 30 ist mit einem Rührwerk 35 und einem Druckmesser 36 ausgerüstet.

Die Erfindung ist nicht auf die beschriebenen Ausführungsbeispiele beschränkt. So kann es zweckmässig sein, anstelle von Kaltwasser den Rätzmühlen 3 oder 3' Warmwasser zuzuführen. Diese Zuführung kann auch vor oder nach der Mühle erfolgen. Bei Zuführung nach der Mühle können die Wägemittel 20 zur Ermittlung der zugeführten Fruchtmenge mit Vorteil durch einen Durchflussmesser ersetzt werden, dessen Messgrösse im Mikroprozessor 22 mit einem mittleren Wert für die Maischedichte gewichtet werden kann. Anstelle der Presse 7 können auch Zentrifugen oder Dekanter zur Fest- Flüssig- Trennung eingesetzt werden.

## Patentansprüche

1. Verfahren zum Trennen von löslichen Stoffen von unlöslichen festen Anteilen in einem mindestens teilweise zerkleinerten, aber noch nicht entsafteten Zellenverband insbesondere von Früchten unter Verwendung einer Presse, Zentrifuge oder eines Dekanters, sowie eines Lösungsmittels, **dadurch** gekennzeichnet, dass zuerst das Lösungsmittel dem mindestens teilweise zerkleinerten, aber noch nicht entsafteten Zellenverband zugeführt wird, und dann die flüssigen Anteile des Gemisches aus Zellenverband und Lösungsmittel mit der Presse (7), Zentrifuge oder mit dem Dekanter von den festen Anteilen getrennt werden.

2. Verfahren nach Anspruch 1, **dadurch** gekennzeichnet, dass als Lösungsmittel eine Flüssigkeit, insbesondere Wasser, Alkohol oder Salzsäure zugeführt wird.

3. Verfahren nach Anspruch 2, **dadurch** gekennzeichnet, dass die Flüssigkeitszufuhr in Abhängigkeit von der Menge der zugeführten Zellenverbände geregelt wird.

4. Verfahren nach Anspruch 3, **dadurch** gekennzeichnet, dass die Menge der zugeführten Flüssigkeit mindestens 5 % der Menge der zugeführten Zellenverbände beträgt.

5. Verfahren nach Anspruch 3, **dadurch** gekennzeichnet, dass die Menge der zugeführten Flüssigkeit proportional der Menge der zugeführten Zellenverbände so geregelt wird, dass die Saftausbeute 90 Gewichts- % der Menge der zugeführten Zellenverbände beträgt.

6. Verfahren nach einem der Ansprüche 2 bis 5, bei dem die Zellenverbände mittels einer Mühle (3, 3') zerkleinert werden, **dadurch** gekennzeichnet, dass die Flüssigkeit vor der Mühle (3, 3') zugemischt wird.

7. Verfahren nach einem der Ansprüche 2 bis 5, bei dem die Zellenverbände mittels einer Mühle (3, 3') zerkleinert werden, **dadurch** gekennzeichnet, dass die Flüssigkeit nach der Mühle (3, 3') zugemischt wird.

8. Verfahren nach einem der Ansprüche 2 bis 5, **dadurch** gekennzeichnet, dass der Flüssigkeit vor dem Zuführen Enzyme zugesetzt werden.

9. Verfahren nach einem der Ansprüche 1 bis 8, **dadurch** gekennzeichnet, dass das Gemisch aus Zellverbänden und Lösungsmittel vor der Fest- Flüssig- Trennung mit einem Überdruck von Luft oder Stickstoff beaufschlagt und unter diesem Überdruck über eine Verweilzeit gehalten wird.

## Claims

1. Method of separating soluble matter from insoluble solid fractions in an at least partly crushed, but not yet de-juiced cell formation, in particular of fruits, using a press, centrifuge or decanter, as well as a solvent, characterised in that the solvent is first supplied to the at least partly crushed, but not yet de-juiced cell formation and then the liquid fractions of the mixture consisting of the cell formation and solvent are separated from the solid fractions by means of the press (7), centrifuge or decanter.

2. Method according to claim 1, characterised in that a liquid, in particular water, alcohol or hydrochloric acid, is supplied as the solvent.

3. Method according to claim 2, characterised in that the supply of liquid is controlled as a function of the quantity of cell formations supplied.

4. Method according to claim 3, characterised in that the quantity of liquid supplied is at least 5 % of the quantity of cell formations supplied.

5. Method according to claim 3, characterised in that the quantity of liquid supplied is controlled in proportion to the quantity of cell formations supplied in such a manner that the juice yield is 90 % by weight of the quantity of cell formations supplied.

6. Method according to one of claims 2 to 5, in which the cell formations are crushed by means of a mill (3, 3'), characterised in that the liquid is added upstream of the mill (3, 3').

7. Method according to one of claims 2 to 5, in which the cell formations are crushed by means of a mill (3, 3'), characterised in that the liquid is added downstream of the mill (3,3').

8. Method according to one of claims 2 to 5, characterised in that enzymes are added to the liquid before it is supplied.

9. Method according to one of claims 1 to 8, characterised in that the mixture consisting of cell formations and solvent is subjected to excess pressure of air or nitrogen prior to the solid-liquid separation and is held under this excess pressure for a holding time.

## Revendications

1. Procédé pour séparer des substances solubles de constituants solides insolubles dans une structure cellulaire au moins partiellement broyée mais dont le jus n'a pas encore été extrait, notamment de fruits, en utilisant une presse, une centrifugeuse ou un appareil à décanter, ainsi qu'un solvant, **caractérisé** en ce qu'on apporte d'abord le solvant à la structure cellulaire au moins partiellement broyée mais dont le jus n'a pas encore été extrait, à la suite de quoi les constituants liquides du mélange de la structure cellulaire et du solvant sont séparés des constituants solides par la presse (7), centrifugeuse ou appareil à décanter.

2. Procédé selon la revendication 1, **caractérisé** en ce qu'on apporte comme solvant un liquide, notamment de l'eau, un alcool ou de l'acide chlorhydrique.

3. Procédé selon la revendication 2, **caractérisé** en ce que l'apport de liquide est régulé en fonction de la quantité de structures cellulaires apportées.

4. Procédé selon la revendication 3, **caractérisé** en ce que la quantité de liquide apporté est égale à au moins 5 % de la quantité de structures cellulaires apportées.

5. Procédé selon la revendication 3, **caractérisé** en ce que la quantité de liquide apporté est régulée proportionnellement à la quantité de structures cellulaires apportées de façon que le rendement en jus soit égal à 90 % (en poids) de la quantité de structures cellulaires apportées.

6. Procédé selon une des revendications 2 à 5, suivant lequel les structures cellulaires sont broyées au moyen d'un broyeur (3, 3'), **caractérisé** en ce que le liquide est apporté en amont du broyeur (3, 3').

7. Procédé selon une des revendications 2 à 5, suivant lequel les structures cellulaires sont broyées au moyen d'un broyeur (3, 3'), **caractérisé** en ce que le liquide est apporté en aval du broyeur (3, 3').

8. Procédé selon une des revendications 2 à 5, **caractérisé** en ce qu'on ajoute au liquide, avant de l'apporter, des enzymes.

9. Procédé selon une des revendications 1 à 8, **caractérisé** en ce que le mélange de structures cellulaires et de solvant est, avant la séparation solide-liquide, chargé sollicité par une surpression d'air ou d'azote, et maintenu sous cette surpression pendant un temps de séjour.
